(19) **Europäisches Patentamt**

**European Patent Office**

**Office européen des brevets**

(11) **EP 1 224 646 B1**

(12) **EUROPÄISCHE PATENTSCHRIFT**

(45) Veröffentlichungstag und Bekanntmachung des Hinweises auf die Patenterteilung:
**21.05.2003  Patentblatt 2003/21**

(21) Anmeldenummer: **00965815.4**

(22) Anmeldetag: **05.09.2000**

(51) Int Cl.⁷: $G08G\ 1/0962$, $G08G\ 1/09$

(86) Internationale Anmeldenummer:
**PCT/DE00/03048**

(87) Internationale Veröffentlichungsnummer:
**WO 01/024136 (05.04.2001 Gazette 2001/14)**

(54) **STEUERUNGSVORRICHTUNG UND -VERFAHREN ZUR FESTLEGUNG EINER INFORMATIONSAUSGABE-RANGFOLGE MEHRERER INFORMATIONSQUELLEN, INSBESONDERE AUDIOQUELLEN**

CONTROL DEVICE AND CONTROL METHOD FOR FIXING AN INFORMATION OUTPUT ORDER FOR SEVERAL INFORMATION SOURCES, ESPECIALLY AUDIO SOURCES

DISPOSITIF DE COMMANDE ET PROCEDE DE DETERMINATION D'UN ORDRE CHRONOLOGIQUE DE SORTIE D'INFORMATIONS DE PLUSIEURS SOURCES D'INFORMATIONS, NOTAMMENT DE SOURCES AUDIO

(84) Benannte Vertragsstaaten:
**DE FR GB IT**

(30) Priorität: **25.09.1999  DE 19946022**

(43) Veröffentlichungstag der Anmeldung:
**24.07.2002  Patentblatt 2002/30**

(73) Patentinhaber: **ROBERT BOSCH GMBH**
**70442 Stuttgart (DE)**

(72) Erfinder:
 • **THIEL, Steffen**
  **63225 Langen (DE)**
 • **HAHN, Ralf**
  **55252 Mainz-Kastel (DE)**
 • **GAPPA, Ute**
  **60486 Frankfurt (DE)**
 • **WERNER, Uwe**
  **60433 Frankfurt (DE)**
 • **LUTZ, Peter**
  **61479 Glashütten (DE)**

(56) Entgegenhaltungen:
 **DE-A- 19 743 249          DE-A- 19 853 665**

 • **ANONYMOUS: "Control Matrix for Parallel Processing Digital Computers in a Multi-Job Environment. April 1982." IBM TECHNICAL DISCLOSURE BULLETIN, Bd. 24, Nr. 11B, 1. April 1982 (1982-04-01), Seiten 5896-5897, XP002160112 New York, US**
 • **PATENT ABSTRACTS OF JAPAN vol. 1999, no. 01, 29. Januar 1999 (1999-01-29) -& JP 10 275298 A (TOYOTA MOTOR CORP;DENSO CORP), 13. Oktober 1998 (1998-10-13)**

## Beschreibung

STAND DER TECHNIK

Die vorliegende Erfindung betrifft eine Steuerungsvorrichtung und ein Steuerungsverfahren zur Festlegung einer Informationsausgabe-Rangfolge mehrerer Informationsquellen, insbesondere Audioquellen, für die Informationsausgabe der Informationsquellen auf einer gemeinsamen Informationsausgabeeinrichtung.

Obwohl auf beliebige Informationsquellen und auf beliebige Informationsausgabeeinrichtungen anwendbar, werden die vorliegende Erfindung sowie die ihr zu Grunde liegende Problematik in Bezug auf Audioquellen und Audiosenken beispielsweise in einem Auto erläutert.

Bei Vorhandensein mehrerer Audioquellen, zum Beispiel Audiogeräte wie Radio, CD-Spieler, Navigationssystem etc., benötigt man einen Mechanismus, der die Freigabe der Audiodatenausgabe bzw. Audioinformationsausgabe, zum Beispiel Musik, Sprachausgaben, Videoton etc., für die jeweiligen Audiosenken, zum Beispiel Lautsprecher, Kopfhörer etc., koordiniert.

Dieser Mechanismus muß festlegen, welche Audioquelle eine Ausgabe tätigen darf, wenn mehere Audioquellen zur gleichen Zeit eine Audioausgabe auf einer Audiosenke vornehmen wollen, zum Beispiel wenn die Audiosenke bereits belegt ist, falls eine neue Anfrage darauf erfolgt.

Bekannte Verfahren basieren vorwiegend auf einer Prioritätssteuerung, bei der jede Audioquelle eine statische Priorität besitzt. Audioquellen mit gleicher oder höherer Priorität unterbrechen sich gegenseitig, d. h. wird eine Audioausgabe einer Audioquelle mit zum Beispiel einer Priorität 3 vorgenommen, wird diese Audioausgabe von einer Ausgabe einer Audioquelle B mit mindestens einer Priorität 3 unterbrochen, bleibt jedoch von einer Audioquelle C mit einer niedrigeren Priorität als 3 unbeeinflußt.

Das Problem einer einfachen Prioritätssteuerung ist es, daß komplexere Vorgänge nicht mehr realisiert werden können. Bei der einfachen Prioritätssteuerung existiert eine lineare Ordnung bezüglich der Audioquellen-Unterbrechung, d.h. unterbricht die Audioquelle A die Audioquelle B, die Audioquelle B die Audioquelle C, so unterbricht die Audioquelle A auch die Audioquelle C. Dies ist manchmal jedoch nicht erwünscht, da es durchaus vorkommt, daß in dem eben genannten Beispiel die Audioquelle A zwar die Audioquelle B, nicht jedoch die Audioquelle C unterbrechen soll.

VORTEILE DER ERFINDUNG

Die erfindungsgemäße Steuerungsvorrichtung mit den Merkmalen des Anspruchs 1 und das entsprechende Steuerungsverfahren gemäß Anspruch 8 weisen gegenüber dem Stand der Technik folgende Vorteile auf:

- Wesentlich mehr Konfliktlösungsarten können mit der Vorrichtung der vorliegenden Erfindung realisiert werden als mit dem priortätsgesteuerten Verfahren, d.h. das Verfahren der vorliegenden Erfindung ist wesentlich flexibler.

- Das Verfahren der vorliegenden Erfindung kann leichter spezifiziert werden, da man mit dem expliziten Vergleich jeweils zweier konkurrierender Audioquellen alle Situationen vorwegnimmt. Insbesondere kann der Benutzer seine individuelle Konfiguration leicht selbst vornehmen.

- Es ist bei Änderung einer Konfliktsituation zwischen zwei Audioquellen immer nur eine lokale Änderung in der vorliegenden Erfindung nötig, während man bei der Prioritätsteuerung nach dem Stand der Technik immer alle anderen Prioritäten mit ändern muß. Letzteres gilt auch für das Hinzufügen neuer Audioquellen.

Die der vorliegenden Erfindung zu Grunde liegende Idee besteht darin, daß die Informationsausgabe-Rangfolge als Audioausgabe-Matrix mit nichtlinearer Ordnung bezüglich der Matrixelemente paarweise für die Audioquelle festgelegt wird und daß das jeweilige Matrixelement der Audioausgabe-Matrix den Vorrang einer entsprechenden Audioquelle gegenüber einer anderen Audioquelle bestimmt.

So kann jedem Audioquellen-Paar ein entsprechendes Matrixelement zugewiesen werden, das die Priorität bezüglich diesem Audioquellen-Paar festsetzt. Es wird insgesamt eine Informationsausgabe-Rangfolge durch die Informationsausgabe-Matrix und der Vorrang einer entsprechenden Informationsquelle gegenüber einer anderen Informationsquelle bestimmt.

In den Unteransprüchen finden sich vorteilhafte Weiterbildungen und Verbesserungen der in Anspruch 1 angegeben Steuerungsvorrichtung.

Gemäß einer bevorzugten Weiterbildung ist eine Auswahleinrichtung zum Auswählen verschiedener Attribute, die einem Matrixelement eines Audioquellen-Paares zugeordnet werden, vorgesehen. Dadurch kann ausgewählt werden, ob eine neue Audioquelle die alte Audioquelle ablöst oder nur temporär unterbricht, ob ein abrupter Übergang zwischen den beiden Audioquellen, oder ein sanfter Übergang mit Überblenden realisiert wird oder ob die zwei Audioquellen "ausgeschaltet" werden, d.h. ob beide Ausgaben durch Überlagerung gleichzeitig erfolgen, was zum Beispiel bei einer Sprachund Musikausgabe Sinn macht.

Gemäß einer weiteren bevorzugten Weiterbildung ist eine Eingabeeinrichtung zum Eingeben der Matrixelemente samt ausgewählter Attribute vorgesehen. Diese Eingabeeinrichtung ermöglicht dem Benutzer, seine eigens gewählte Konfiguration selbst vorzunehmen.

Gemäß einer weiteren bevorzugten Weiterbildung weist die Steuerungsvorrichtung einen Bildschirm auf. Dadurch ist die augenblicklich eingestellte Konfiguration leicht ersichtlich und jegliche Änderung dieser Konfiguration kann online dargestellt werden.

Gemäß einer weiteren bevorzugten Weiterbildung ist eine Speichereinrichtung zum Speichern der eingegebenen Matrixelemente vorgesehen. Dadurch bleibt die individuell eingestellte Konfiguration auch bei einer Trennung der Steuerungsvorrichtung von der Stromzufuhr erhalten und es bedarf bei einer erneuten Einschaltung der Steuerungsvorrichtung keiner neuen Eingabe der gewünschten Konfiguration.

Gemäß einer weiteren bevorzugten Weiterbildung ist eine Verwaltungseinrichtung zur Verwaltung einer Reihenfolge der in einer Warteliste befindlichen Audioquellen vorgesehen. Diese Verwaltungseinrichtung verwaltet die noch wartenden Audioquellen. Wenn zum Beispiel eine Audioquelle ihre Ausgabe beendet hat, wird danach die oberste Audioquellenanfrage der Agenda aktiviert. Bei einer neuen Anfrage einer Audioquelle, die die aktive Audioquelle "schlägt", also ablöst oder unterbricht, wird die bis dahin aktive Audioquelle oben auf die Agenda gesetzt. Wenn die neue Audioquelle die aktive Audioquelle nicht "schlägt", "sickert" sie von oben in die Agenda ein, d.h. sie wird an der Stelle einsortiert, an der sie die nächste Audioquelle "schlägt". Durch diese Verwaltungseinrichtung können Audioquellen jederzeit ihren Status abfragen und ihre "Anforderung zurückziehen, falls sie nach einer bestimmten Zeitdauer nicht mehr aktuell ist.

Gemäß einer weiteren bevorzugten Weiterbildung ist die Audiosenke entweder als Lautsprecher oder als Kopfhörer vorgesehen.

ZEICHNUNGEN

Ausführungsbeispiele der Erfindung sind in den Zeichnungen dargestellt und in der nachfolgenden Beschreibung näher erläutert.

Es zeigen:

Fig. 1    ein Blockschaltbild einer Audioausgabe mit mehreren an einer Audiosenke angeschlossenen Audioquellen mit einer als Prioritätstabelle dargestellten Prioritätssteuerung nach dem Stand der Technik;

Fig. 2    ein Blockschaltbild einer Audio-Ausgabe mit mehreren an einer Audiosenke angeschlossenen Audioquellen und mit einer als Matrix dargestellten Steuerung als Ausführungsbeispiel der vorliegenden Erfindung; und

Fig. 3    ein Blockschaltbild einer Audio-Ausgabe mit mehreren an einer Audiosenke angeschlossenen Audioquellen und mit einer als Matrix dargestellten Steuerung als weiteres Ausführungsbeispiel der vorliegenden Erfindung.

BESCHREIBUNG DER AUSFÜHRUNGSBEISPIELE

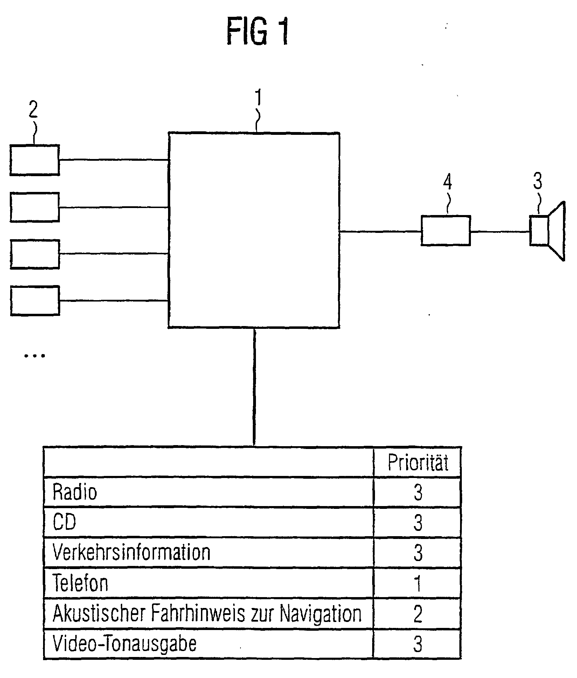

Fig. 1 zeigt ein Verfahren nach dem Stand der Technik, welches ein prioritätsgesteuertes Verfahren darstellt. Bei einem prioritätsgesteuerten Verfahren wird jeder Audioquelle 2 eine statische Priorität zugeordnet. Audioquellen 2 mit gleicher oder höherer Priorität unterbrechen sich gegenseitig. Aus der in Fig. 1 dargestellten Prioritätstabelle kann folgendes Verhalten realisiert werden:

Eine Telefon-Audioausgabe wird nie "geschlagen", d.h. abgelöst oder unterbrochen, von irgendeiner anderen Ausgabequelle, eine Navigations-Audioausgabe wird nur von einer Telefon-Audioausgabe "geschlagen", während Radio, CD, Verkehrsinformation und Video quasi gleichberechtigt sind und sich jeweils gegenseitig schlagen. Dadurch entsteht eine bestimmte Ordnung bezüglich der Audioquellen-Ablösung oder -Übernahme, denn eine Telefon-Audioausgabe "schlägt" eine Navigationsausgabe und diese Navigationsausgabe wiederum "schlägt" zum Beispiel eine CD-Ausgabe, was somit bedeutet, daß eine Telefonausgabe auch die CD-Ausgabe "schlägt".

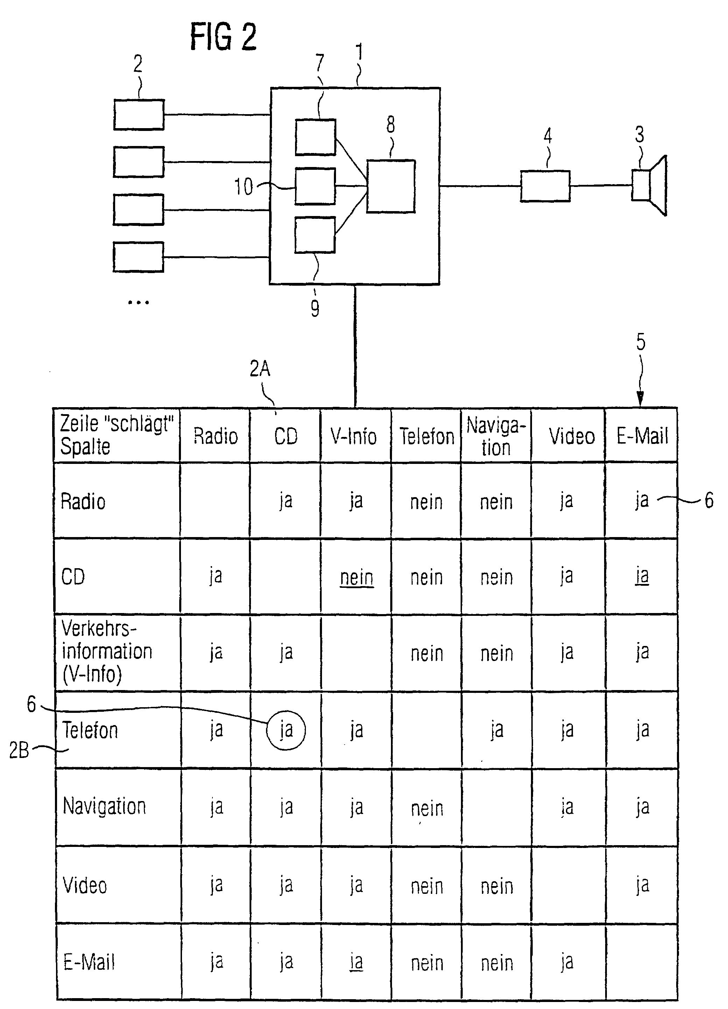

Fig. 2 illustriert ein Blockschaltbild einer Audioausgabe, bei der mehrere Audioquellen 2, wie zum Beispiel Radio, CD-Spieler, Navigationssysteme etc., an einer Audiosenke 3, wie zum Beispiel einem Lautsprecher oder einem Kopfhörer, über einen Verstärker 4 angeschlossen sind, und eine Steuerungsvorrichtung als Ausführungsbeispiel der vorliegenden Erfindung.

Bei Vorhandensein mehrerer Audioquellen 2 wie zum Beispiel im Auto benötigt man eine Steuerungsvorrichtung, welche die Freigabe der Audio-Datenausgabe, wie zum Beispiel Musik, Sprachausgaben, Videoton usw., für die jeweiligen Audiosenken 3, zum Beispiel Lautsprecher oder Kopfhörer, koordiniert. Diese Steuerungsvorrichtung muß festlegen, welche Audioquelle 2 eine Ausgabe tätigen darf, wenn mehrere Audioquellen 2 zur gleichen Zeit eine Audio-Ausgabe auf einer Audiosenke 3 vornehmen wollen oder wenn die Audiosenke 3 bereits belegt ist, falls eine neue Anfrage darauf erfolgt.

Die Steuerungsvorrichtung ist zwischen den Audioquellen 2 und der gemeinsamen Audiosenke 3 geschaltet und beinhaltet eine Eingabeeinrichtung 9 zur Eingabe einer Entscheidung, die angibt, welche Quelle 2 eine andere "schlägt". Das heißt, man beschreibt die Konfliktlösung entlang der Situationen, daß eine Quelle 2A der Audioquellen 2 gerade aktiv ist, wenn eine neue Anforderung einer anderen Quelle 2B der Audioquellen 2 angemeldet wird.

Mit dieser Eingabeeinrichtung 9 kann jedem Audioquellen-Paar 2A, 2B individuell eine Priorität, die nur für dieses Audioquellen-Paar 2A, 2B gilt, zugewiesen werden.

Durch das in Figur 2 dargestellte Beispiel wird oben beschriebenes näher erläutert. In diesem Beispiel ist die Audioquelle 2A, hier ein CD-Spieler, aktiv, d.h. die Audiosenke 3 ist durch die Audioausgabe des CD-Spielers (Quelle 2A) bereits belegt. Falls nun eine neue Anfrage einer Audioquelle 2B zur Audioausgabe auf der gleichen Audiosenke 3 erfolgt, wird die Audioausgabe der Quelle 2A (CD-Spieler) der Matrix 5 dann von der Audioausgabe der Quelle 2B (Telefon) der Zeile der Matrix 5 "geschlagen", wenn der Tabelleneintrag bzw. das Matrixelement 6 "ja" ist. Ist das Matrixelement 6 des Audioquellen-Paares 2A, 2B "nein", gibt die bisherige Audioquelle 2 weiterhin ihre Audiodaten auf die Audiosenke 3.

Somit kann durch die Eingabeeinrichtung 9 eine individuelle Entscheidungsmatrix aufgestellt werden und eine Informations-Ausgaberangfolge mit nichtlinearer Ordnung bezüglich der Matrixelemente 6 paarweise für die Audioquellen 2 festgelegt werden. Die in Figur 2 unterstrichenen Einträge in der Audioausgabe-Matrix 5 realisieren folgendes Beispiel dieser Ausführungsform der vorliegenden Erfindung.

Eine Audioausgabe auf der Audiosenke 3 einer Verkehrsinformation (V-Info) wird von einer neuen auf die gleiche Audiosenke 3 ausgegebenen E-Mail-Nachricht "geschlagen". Dies ist durch das entsprechende Matrixelement 6 "ja" bestimmt. Eine E-Mail-Nachricht wiederum wird von einer Audioausgabe eines CD-Spielers auf die gleiche Senke 3 "geschlagen". Dies bedeuet jedoch nicht, daß die Audioausgabe des CD-Spielers eine bisherige Ausgabe einer Verkehrsinformation (V-Info) "schlägt", denn das entsprechende Matrixelement 6 wurde zu "nein" bestimmt und dies bewirkt, daß die bisherige Audioquelle 2A von der neuen Audioquelle 2B nicht "geschlagen" wird.

Wenn eine Audioquelle 2 ihre Audioausgabe beendet hat, wird mittels der Steuerungsvorrichtung eine weitere Audioquellenanfrage aktiviert. Dazu wird eine Agenda mit noch "wartenden" Audioquellen 2 mittels einer Verwaltungseinrichtung verwaltet, d.h. es wird eine Prioritätsrangliste erstellt, wobei die oberste Audioquellenanfrage der Agenda aktiviert wird, wenn eine Audioquelle 2 ihre Audioausgabe beendet hat. Bei Eintreffen einer neuen Anfrage einer Audioquelle 2B, welche die aktive Audioquelle 2A "schlägt", wird die bis dahin aktive Audioquelle 2A oben auf die Agenda gesetzt. Falls eine neue Anfrage einer Audioquelle 2B eintrifft, welche die aktive Audioquelle 2A nicht "schlägt", wird sie von oben in die Agenda an der Stelle einsortiert, an der sie die nächste Audioquelle verdrängt. Mit der Steuerungsvorrichtung können jederzeit die Audioquellen 2 ihren aktuellen Status abfragen und ebenso ihre Anforderung zurückziehen, falls sie nach einer bestimmten Zeitdauer nicht mehr aktuell ist.

Die Steuerungsvorrichtung weist ferner eine Speichereinrichtung 10 auf, mit der die eingegebenen Matrixelemenete 6 in die Audioausgabe-Matrix 5 gespeichert werden.

Ein Bildschirm 8 zum Betrachten der augenblicklichen Konfiguration ist in der Steuerungsvorrichtung vorgesehen. So kann der Benutzer jederzeit seine aktuelle Einstellung betrachten und entsprechend seiner Vorstellung mittels der Eingabeeinrichtung 9 ändern.

Figur 2 beschreibt ein Verfahren zur Festlegung einer Informations-Ausgaberangfolge mehrerer Audioquellen 2 für die Informationsausgabe der Audioquellen 2 auf einer gemeinsamen Audiosenke 3, wobei die Informations-Ausgaberangfolge als Audioausgabe-Matrix 5 mit nichtlinearer Ordnung bezüglich der Matrixelemente 6 paarweise für die Audioquellen 2 festgelegt wird und wobei das jeweilige Matrixelement 6 der Audioausgabe-Matrix 5 den Vorrang einer entsprechenden Audioquelle 2B gegenüber einer anderen Audioquelle 2A bestimmt, als ein Ausführungsbeispiel der vorliegenden Erfindung.

Die Festlegung einer Informations-Ausgaberangfolge mehrerer Audioquellen 2 erfolgt über ein matrixbasiertes Verfahren, bei dem angegeben werden kann, welche Audioquelle 2B eine andere Audioquelle 2A verdrängt. Es wird die Konfliktlösung entlang der Situationen beschrieben, daß eine Audioquelle 2A gerade aktiv ist, wenn eine neue Anforderung einer anderen Audioquelle 2B angemeldet wird.

In diesem Ausführungsbeispiel der vorliegenden Erfindung ist als Kriterium einer Priorität zwischen jeweils 2 Audioquellen 2A und 2B entweder eine Ablösung der bisherigen Audioquelle 2A durch die neu dazukommende Audioquelle 2B oder ein Fortbestehen der Ausgabe der bisherigen Audioquelle 2A gegeben, wobei dieser Sachverhalt durch die Matrixelemente 6 "ja" bzw."nein" beschrieben wird.

Es wird zunächst jedem Audioquellen-Paar 2A, 2B ein entsprechendes Matrixelememt 6 in der Audioausgabe-Matrix 5 mittels der Eingabeeinrichtung 9 zugewiesen. Die Audioquellen 2A der Spalten bezeichnen die aktuell aktiven Audioquellen. Die Audioquellen 2B der Zeilen bezeichnen die neu hinzukommenden Audioquellen. Dadurch wird durch das jeweilige Matrixelement festgelegt, ob eine Audioquelle 2A in der Spalte, die aktuell aktiv ist, d.h. gerade eine Audioausgabe auf eine bestimmte Audiosenke 3 vornimmt, von einer Audioquelle 2B der Zeile, die neu dazugekommen ist, d.h. eine Audioausgabe auf die gleiche Audiosenke 3 vornimmt, "geschlagen" wird oder nicht, je nachdem ob der Tabelleneintrag "ja" oder "nein" ist. Bei dem Tabelleneintrag "ja" kommt die neu hinzugekommene Audioquelle 2B zum Zug, dagegen gibt die bisherige Audioquelle 2A bei einem Tabelleneintrag "nein" weiterhin ihre Audiodaten auf die Audiosenke 3.

In dem in Figur 2 gezeigten Beispiel mit den unterstrichenen Matrixelementen 6 des Ausführungsbeispieles der vorliegenden Erfindung verdrängt eine CD-Spieler-Audioausgabe eine E-Mail-Audioausgabe und eine E-Mail-Audioausgabe eine Verkehrsinformations-Audioausgabe, da der jeweilige Tabelleneintrag "ja" ist, jedoch wird eine Verkehrsinformations-Audioausgabe nicht von einer CD-Spieler-Audioausgabe verdrängt, da der Tabelleneintrag "nein" ist.

Die so in die Ausgabe-Matrix 5 eingegebenen Matrixelemente 6 werden mittels einer Speichervorrichtung 10 gespeichert. Dadurch wird die benutzer-definierte Konfiguration auch bei einer Trennung der Vorrichtung von der Stromzufuhr beibehalten und sie muß bei der nächsten Anwendung der Vorrichtung nicht erneut eingegeben werden.

Mittels einer Verwaltungseinrichtung wird eine Reihenfolge aller aktiven Audioquellen 2 anhand der jeweiligen Matrixelemente 6 gebildet. Wenn die Ausgabe der auf der Audiosenke 3 ausgegebenen Audioquelle 2A beendet ist, wird die oberste Audioquellenanfrage der Agenda aktiviert, die mittels der Verwaltungseinrichtung gebildet ist. Wenn eine neue Anfrage einer Audioquelle 2B eintrifft, die die aktive Audioquelle 2A "schlägt", wird die bis dahin aktive Audioquelle 2A oben auf die Agenda gesetzt. Wenn eine neue Anfrage einer Audioquelle 2B eintrifft, die die aktive Audioquelle 2A nicht "schlägt", "sickert" sie von oben in die Agenda ein, d.h. sie wird an der Stelle einsortiert, an der sie die nächste Audioquelle 2 "schlägt". Audioquellen 2 können jederzeit ihren Status abfragen und auch ihre Anforderung zurückziehen, falls sie nach einer bestimmten Zeitdauer nicht mehr aktuell ist.

Beispielsweise wird in einem Auto eine Audio-CD abgespielt. Das Abspielen der CD wird durch die höhere Audioausgabe der Verkehrsinformation unterbrochen. Während der Verkehrsinformation kommt ein Telefonanruf an , der wiederum die Audioausgabe der Verkehrsinformation unterbricht, da der Telefonanruf eine höhere Priorität der Audioausgabe als die Verkehrsinformation besitzt. Nach dem Telefonat wird auf die Verkehrsinformations-Durchsage zurückgeschaltet, sofern diese noch nicht beendet ist, da sie in der Agenda an oberster Stelle steht. Nach Beendigung der Verkehrsinformations-Durchsage fährt der CD-Spieler mit dem Abspielen der CD fort, da er nun den obersten Platz in der Rangliste der Agenda einnimmt.

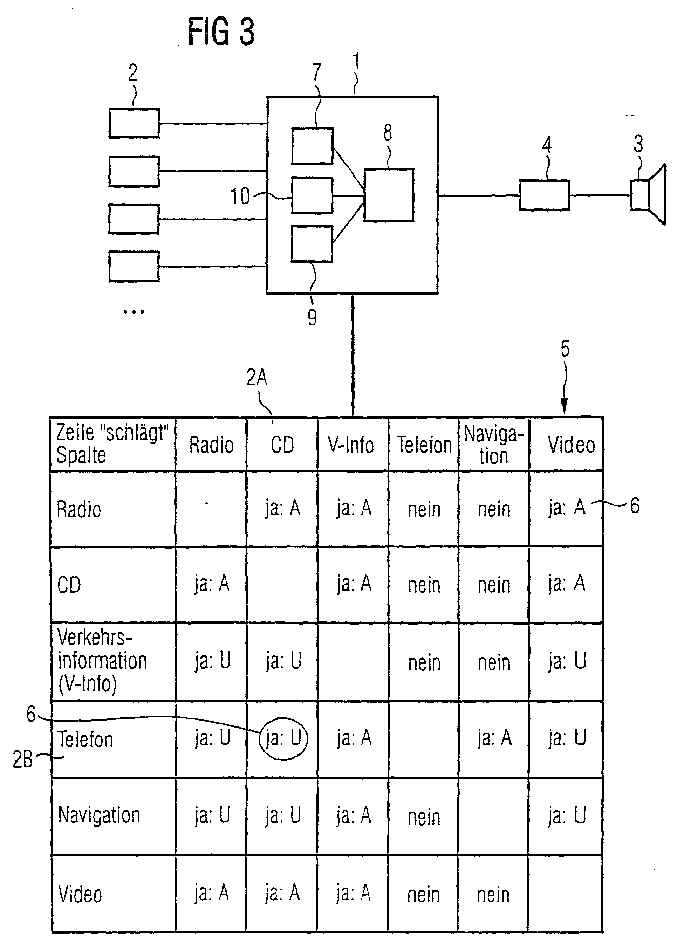

Figur 3 zeigt ein weiteres Ausführungsbeispiel der vorliegenden Erfindung. Die durch die Eingabeeinrichtung 9 eingegebenen Matrixelemente 6 der Informationsausgabe-Matrix 5 legen, wie oben beschrieben, eine Informationsausgabe-Rangfolge mehrerer Audioquellen 2 auf einer gemeinsamen Audiosenke 3 fest. In diesem Ausführungsbeispiel der vorliegenden Erfindung wird durch das jeweilige Matrixelement 6 dem entsprechenden Audioquellen-Paar 2A, 2B das Kriterium zugewiesen, ob die neue Audioquelle 2B die bisherige Audioquelle 2A ablöst, gekennzeichnet durch das Matrixelement "ja:A", oder nur temporär unterbricht, gekennzeichnet durch das Marrixelement "ja: U" oder ob die bisherige Quelle 2A nicht verdrängt wird, gekennzeichnet durch das Matrixelement "nein".

Dadurch kann man realisieren, daß bei der Wiedergabe von Unterhaltungsquellen wie Radio, CD und Video nach der Übernahme durch eine Informationsquelle wie Verkehrinformation, Navigation oder Telefon wieder auf die Unterhaltungsquelle zurückgeschaltet wird.

Eine weitere Ausführungsform der vorliegenden Erfindung besitzt als Matrixelement 6 der Audioausgabe-Matrix 5 die Eigenschaft "abrupter Übergang" versus "sanftes Überblenden". Dieses Attribut, das einem Audioquellen-Paar 2A, 2B zugeordnet ist, ermöglicht die Auswahl, ob im Falle eines "Schlagens" ein abrupter Übergang oder ob ein sanfter Übergang mit Überblenden zwischen zwei Audioquellen 2a, 2B realisiert wird, d.h. die Audioquelle 2A wird langsam ausgeblendet (fade out), während die Audioquelle 2B langsam eingeblendet wird (fade in).

In einer weiteren Ausführungsform der vorliegenden Erfindung besitzt das Matrixelement 6 der Audioausgabe-Matrix 5, das einem Audioquellen-Paar 2A, 2B zugeornet ist, die Eigenschaft "Trennung" versus "Überlagerung". Dieses Attribut ermöglicht die Auswahl, ob die zwei Audioquellen 2A und 2B "aufgeschaltet" werden, d.h. beide Audioausgaben durch eine Überlagerung gleichzeitig erfolgen, zum Beispiel bei einer Sprach- und Musikausgabe, oder ob die beiden Ausgaben der beiden Audioquellen 2A und 2B getrennt voneinander erfolgen.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Insbesondere lassen sich die oben erwähnten Attribute der Matrixelemente 6 der ausgeführten Ausführungsbeispiele der vorliegenden Erfindung kombinieren oder durch zusätzliche andere Attribute, die für sich alleine sinnvoll oder zusätzlich zu den vorherigen Attributen sinnvoll sind, ergänzen.

**Patentansprüche**

1. Steuerungsvorrichtung zur Festlegung einer Informationsausgabe-Rangfolge mehrerer Informationsquellen (2), insbesondere Audioquellen, für die Informationsausgabe der Informationsquellen (2) auf einer gemeinsamen Informationsausgabeeinrichtung (3), wobei die Informationsausgabe-Rangfolge als Informationsausgabe-Matrixeinrichtung (5) mit nichtlinearer Ordnung bezüglich der Matrixelemente (6) paarweise für die Informationsquellen (2) festgelegt ist.

2. Steuerungsvorrichtung nach Anspruch 1, **dadurch gekennzeichnet, daß** eine Auswahleinrichtung (7) zum Auswählen verschiedener Attribute, die einem Matrixelement (6) eines Informationsquellen-Paares (2A, 2B) zugeordnet sind, vorgesehen ist.

3. Steuerungsvorrichtung nach Anspruch 2, **dadurch**

**gekennzeichnet, daß** eine Eingabeinrichtung (9) zum Eingeben der Matrixelemente (6) samt ausgewählter Attribute vorgesehen ist.

4. Steuerungsvorrichtung nach einem der Ansprüche 1 bis 3, **dadurch gekennzeichnet, daß** ein Bildschirm (8) vorgesehen ist.

5. Steuerungsvorrichtung nach einem der Ansprüche 1 bis 4, dadurch gekennzeicnet, daß eine Speichereinrichtung (10) zum Speichern der eingegebenen Matrixelemente (6) vorgesehen ist.

6. Steuerungsvorrichtung nach einem der Ansprüche 1 bis 5, **dadurch gekennzeichnet, daß** eine Verwaltungseinrichtung zum Verwalten einer Reihenfolge der sich in der Warteliste befindenden Informationsquellen (2) vorgesehen ist.

7. Steuerungsvorrichtung nach einem der Ansprüche 1 bis 6, **dadurch gekennzeichnet, daß** die Informationsausgabeeinrichtung (3) als Lautsprecher oder Kopfhörer vorgesehen ist.

8. Steuerungsverfahren zur Festlegung einer Informationsausgabe-Rangfolge mehrerer Informationsquellen (2), insbesondere Audioquellen, für die Informationsausgabe der Informationsquellen (2) auf einer gemeinsamen Informationsausgabeeinrichtung (3), wobei die Informationsausgabe-Rangfolge als Informationsausgabe-Matrix (5) mit nichtlinearer Ordnung bezüglich der Matrixelemente (6) paarweise für die Informationsquellen (2) festgelegt wird und wobei das jeweilige Matrixelement (6) der Informationsausgabe-Matrix (5) den Vorrang gegenüber einer entsprechenden Informationsquelle (2B) gegenüber einer anderen Informationsquelle (2A) bestimmt.

9. Steuerungsverfahren nach Anspruch 8, **dadurch gekennzeichnet, daß** verschiedene Attribute der Matrixelemente (6), die jeweils einem Informationsquellen-Paar (2A, 2B) zugeordnet sind, ausgewählt werden.

10. Steuerungsverfahren nach Anspruch 8 oder 9, **dadurch gekennzeichnet, daß** die Matrixelemente (6) der Informationsausgabe-Matrix (5) individuell in eine Eingabeeinrichtung (9) eingegeben werden.

11. Steuerungsverfahren nach einem der Ansprüche 8 bis 10, **dadurch gekennzeichnet, daß** die Matrixelemente (6) der Informationsausgabe-Matrix (5) in einer Speichervorrichtung (10) gespeichert werden.

12. Steuerungsverfahren nach Anspruch 11, **dadurch gekennzeichnet, daß** als Attribut eines einem Informationsquellen-Paar (2A, 2B) zugeordneten Matrixelements (6) zwischen einer Ablösung und einer Unterbrechung der entsprechenden länger aktiven Informationsquelle (2A) ausgewählt wird.

13. Steuerungsverfahren nach Anspruch 11 oder 12, **dadurch gekennzeichnet, daß** zwischen einem abrupten Übergang und einem sanften Überblenden zwischen den beiden Informationsquellen (2A, 2B) ausgewählt wird.

14. Steuerungsverfahren nach einem der Ansprüche 11 bis 13, **dadurch gekennzeichnet, daß** zwischen einer Trennung und einer Überlagerung der beiden entsprechenden Informationsquellen (2A, 2B) ausgewählt wird.

15. Steuerungsverfahren nach einem der Ansprüche 8 bis 14, **dadurch gekennzeichnet, daß** mittels der Verwaltungseinrichtung eine Reihenfolge der sich in einer Warteliste befindenden Informationsquellen (2) anhand der Attribute derjeweiligen Matrixelemente gebildet wird.

**Claims**

1. Control apparatus for stipulating an information-output order of priority in a plurality of information sources (2), particularly audio sources, for information output from the information sources (2) on a common information output device (3), where the information-output order of priority is stipulated as an information-output matrix device (5) with non-linear ordering for the matrix elements (6) in pairs for the information sources (2).

2. Control apparatus according to Claim 1, **characterized in that** a selection device (7) is provided for selecting various attributes which are associated with a matrix element (6) in an information-source pair (2A, 2B).

3. Control apparatus according to Claim 2, **characterized in that** an input device (9) is provided for inputting the matrix elements (6) together with selected attributes.

4. Control apparatus according to one of Claims 1 to 3, **characterized in that** a screen (8) is provided.

5. Control apparatus according to one of Claims 1 to 4, **characterized in that** a memory device (10) is provided for storing the matrix elements (6) which have been input.

6. Control apparatus according to one of Claims 1 to 5, **characterized in that** a management device is provided for managing an order for the information sources (2) contained in the waiting list.

**7.** Control apparatus according to one of Claims 1 to 6, **characterized in that** the information output device (3) is provided as a loudspeaker or headset.

**8.** Control apparatus for stipulating an information-output order of priority in a plurality of information sources (2), particularly audio sources, for information output from the information sources (2) on a common information output device (3), where the information-output order of priority is stipulated as an information-output matrix (5) with non-linear ordering for the matrix elements (6) in pairs for the information sources (2), and where the respective matrix element (6) in the information-output matrix (5) determines the priority of a corresponding information source (2B) with respect to another information source (2A).

**9.** Control method according to Claim 8, **characterized in that** various attributes of the matrix elements (6) respectively associated with an information-source pair (2A, 2B) are selected.

**10.** Control method according to Claim 8 or 9, **characterized in that** the matrix elements (6) in the information-output matrix (5) are input individually into an input device (9).

**11.** Control method according to one of Claims 8 to 10, **characterized in that** the matrix elements (6) in the information-output matrix (5) are stored in a memory apparatus (10).

**12.** Control method according to Claim 11, **characterized in that** as the attribute of a matrix element (6) associated with an information-source pair (2A, 2B), a selection is made between separation and interruption of the respective information source (2A) which is active for longer.

**13.** Control method according to Claim 11 or 12, **characterized in that** a selection is made between an abrupt change and gentle crossover between the two information sources (2A, 2B).

**14.** Control method according to one of Claims 11 to 13, **characterized in that** a selection is made between isolation and superimposition of the two corresponding information sources (2A, 2B).

**15.** Control method according to one of Claims 8 to 14, **characterized in that** the management device is used to form an order for the information sources (2) contained in a waiting list on the basis of the attributes of the respective matrix elements.

**Revendications**

**1.** Dispositif de commande pour fixer un ordre d'émission d'informations provenant de plusieurs sources d'informations (2), notamment de sources audio pour émettre les informations des sources d'informations (2) par une installation d'émission d'informations (3) commune, l'ordre d'émission des informations étant fixé comme installation en matrice d'émission d'informations (5) avec un ordre non linéaire concernant les éléments de matrice (6), par paires pour les sources d'informations (2).

**2.** Dispositif de commande selon la revendication 1, **caractérisé en ce qu'** il comporte une installation de sélection (7) pour sélectionner différents attributs associés à un élément de matrice (6) d'une paire de sources d'informations (2A, 2B).

**3.** Dispositif de commande selon la revendication 2, **caractérisé par** une installation d'entrée (9) pour introduire les éléments de matrice (6) y compris les attributs sélectionnés.

**4.** Dispositif de commande selon l'une quelconque des revendications 1 à 3, **caractérisé par** un écran image (8).

**5.** Dispositif de commande selon l'une quelconque des revendications 1 à 4, **caractérisé par** une installation de mémoire (10) pour enregistrer les éléments de matrice (6) introduits.

**6.** Dispositif de commande selon l'une quelconque des revendications 1 à 5, **caractérisé par** une installation de gestion pour gérer un ordre de sources d'informations (2) contenu dans la liste d'attente.

**7.** Dispositif de commande selon l'une quelconque des revendications 1 à 6, **caractérisé en ce que** l'installation d'émission d'informations (3) est constituée par des haut-parleurs ou des casques d'écoute.

**8.** Procédé de commande pour fixer l'ordre d'émission d'informations provenant de plusieurs sources d'informations (2) notamment de sources audio pour émettre les informations des sources d'informations (2) par une installation d'émission d'informations (3) commune, l'ordre d'émission des informations comme matrice d'émission d'informations (5) étant fixé avec une association non linéaire entre les éléments de matrice (6), par paires pour les sources d'informations (2), et l'élément de matrice respectif (6) de la matrice d'informations (5) donnant la priorité à une source d'informations correspondante (2B) par rapport à une autre source d'informations (2A).

**9.** Procédé de commande selon la revendication 8, **caractérisé en ce qu'** on sélectionne différents attributs de la matrice d'éléments (6) qui sont associés chaque fois à une paire de source d'informations (2A, 2B).

**10.** Procédé de commande selon la revendication 8 ou 9, **caractérisé en ce que** les éléments (6) de la matrice d'émission d'informations (5) sont introduits individuellement dans une installation d'introduction (9).

**11.** Procédé de commande selon l'une quelconque des revendications 8 à 10, **caractérisé en ce que** les éléments de matrice (6) de la matrice d'émission d'informations (5) sont enregistrés dans un dispositif de mémoire (10).

**12.** Procédé de commande selon la revendication 11, **caractérisé en ce que** l'attribut d'un élément de matrice (6) associé à une paire de sources d'informations (2A, 2B) sélectionne entre une substitution et une coupure de la source d'informations (2A) active jusqu'à présent.

**13.** Procédé de commande selon la revendication 11 ou 12, **caractérisé en ce qu'** on sélectionne entre un passage brusque et une transition en douceur entre les deux sources d'informations (2A, 2B).

**14.** Procédé de commande selon l'une quelconque des revendications 11 à 13, **caractérisé en ce qu'** on sélectionne entre une coupure et une combinaison des deux sources d'informations (2A, 2B).

**15.** Procédé de commande selon l'une quelconque des revendications 8 à 14, **caractérisé en ce qu'** à l'aide de l'installation de gestion, on forme un ordre des sources d'informations (2) sur une liste d'attente à l'aide des attributs de chaque élément de matrice respectif.

# FIG 1

| | Priorität |
|---|---|
| Radio | 3 |
| CD | 3 |
| Verkehrsinformation | 3 |
| Telefon | 1 |
| Akustischer Fahrhinweis zur Navigation | 2 |
| Video-Tonausgabe | 3 |

## FIG 2

| Zeile "schlägt" Spalte | Radio | CD | V-Info | Telefon | Navigation | Video | E-Mail |
|---|---|---|---|---|---|---|---|
| Radio | | ja | ja | nein | nein | ja | ja |
| CD | ja | | _nein_ | nein | nein | ja | _ja_ |
| Verkehrs-information (V-Info) | ja | ja | | nein | nein | ja | ja |
| Telefon | ja | (ja) | ja | | ja | ja | ja |
| Navigation | ja | ja | ja | nein | | ja | ja |
| Video | ja | ja | ja | nein | nein | | ja |
| E-Mail | ja | ja | _ja_ | nein | nein | ja | |

# FIG 3

| Zeile "schlägt" Spalte | Radio | CD | V-Info | Telefon | Naviga-tion | Video |
|---|---|---|---|---|---|---|
| Radio | . | ja: A | ja: A | nein | nein | ja: A |
| CD | ja: A | | ja: A | nein | nein | ja: A |
| Verkehrs-information (V-Info) | ja: U | ja: U | | nein | nein | ja: U |
| Telefon | ja: U | ja: U | ja: A | | ja: A | ja: U |
| Navigation | ja: U | ja: U | ja: A | nein | | ja: U |
| Video | ja: A | ja: A | ja: A | nein | nein | |